# EUROPEAN PATENT APPLICATION

(11) **EP 2 727 800 A1**
(43) Date of publication of application: **07.05.2014**
(21) Application number: 11824626.3
(22) Date of filing: 15.09.2011
(51) Int. Cl.: B62D 49/08, G05D 1/02, A01B 69/00

(54) **DYNAMIC INCLINATION-BASED SAFETY SYSTEM**

(30) Priority: 16.09.2010 ES 201031388
(71) Applicant: Empresa De Gestion Medioambiental S.A., 41092 Sevilla (ES)
(72) Inventor: CRESPO CURADO, Jesús, E-41092 Sevilla (ES); BLANCO ROLDAN, Gregorio, E-41092 Sevilla (ES); CHACÓN GIMENEZ, Fernando, E-41092 Sevilla (ES); GAMARRA DIEZMA, Juan, Luis, E-41092 Sevilla (ES); GIL RIBES, Jesús, Antonio, E-41092 Sevilla (ES)
(74) Representative: Schlich, George
(86) International application number: PCT/ES2011/070646
(87) International publication number: WO 2012/035189

(57) **Abstract**

The invention relates to a device for the dynamic monitoring of the inclination of a forest vehicle travelling on a particular terrain, comprising: an inclinometer (10) for providing data relating to the inclination of the vehicle; a GPS device (20) for providing data relating to the position of the vehicle on said terrain, said inclinometer (10) and GPS (20) being installed on board the vehicle and connected to an on-board processing unit (30) configured, at given intervals, to (i) obtain vehicle inclination data from the inclinometer, (ii) compare these vehicle inclination data to pre-determined inclination thresholds, (iii) generate an alarm signal if the data are above the pre-determined inclination thresholds; obtain vehicle positioning data from the GPS, and (iv) record each vehicle inclination and positioning data reading in a register (40) according to a pre-determined system; means for connecting to an acousto-optic warning device (60) that can be activated in response to the generation of the alarm signal; and means for connecting to display means (50) for displaying the vehicle inclination data, said display means being visible to the user of the vehicle.

## Description

### Field of the invention

The present invention lies within the field of forestry machinery, and specifically within the area of warning the user of the forestry machinery and of tractors of a possible risk of rollover when the tractor is traveling over any type of terrain.

### Background of the invention

It is a fact that during the operation of forestry machinery or tractors, accidents occur due to the rollover of the tractor.

There are many systems on systems *[sic]* for protection against vehicle rollover, such as ESP (the Electronic Stability Program) and similar systems, which improve stability and reduce the risk of rollovers, side slipping, and the so-called "scissors" effect. These are active systems. They have sensors that measure parameters such as speed, inclination, angular velocity, acceleration, tire pressure, etc., and act when a risk of rollover is detected, for example, by reducing engine power, acting on the shock dampers, or braking the wheels individually, or else by triggering protective elements, such as airbags, when they detect the occurrence of a rollover.

However, these proposed anti-rollover systems do not take into consideration the specific conditions of the terrain over which the machinery is traveling - which information is important in determining the risk of rollover of the machinery in question.

European patent application EP-1648736-A1 describes a system that warns of the rollover danger for trucks traveling on highways, based on their speed, the position of the truck as obtained via GPS, and the radius of the curves according to the cartography.

Thus, the need exists to improve the systems for the real-time determination of the possible rollover of forestry machinery (or of the tractor) when it is traveling over a given type of terrain, with its specific conditions such as the slope and the type of soil or stoniness, so as to be able to generate the corresponding warning for the user of the said machinery.

### Description of the invention

The invention relates to a device for the dynamic monitoring of the inclination of the vehicle according to Claim 1. The preferred embodiments of the device are described in the dependent claims.

The above-mentioned deficiencies are remedied by the device according to the invention, which is installed on board the individual vehicle to be monitored and which allows the user and/or operator to be informed of the possible risk of the rollover of the said vehicle.

In a first aspect, the invention relates to a device for the dynamic monitoring of the inclination of a forestry vehicle located on a particular type of terrain, which device comprises:
- An inclination measurement unit, for providing data about the inclination of the said vehicle;
- A GPS positioning device, for providing data about the position of the vehicle on the said terrain;
with the said inclination measurement unit and the said GPS positioning device being installed on board the vehicle and connected to a processing unit that is likewise installed on board the vehicle and that is configured so as, at preestablished time intervals, to:
- Take, from the said inclination measurement unit, a reading of data about the inclination of the vehicle;
- Compare the said data about the inclination of the vehicle against certain preestablished inclination limits;
- Generate an alarm signal if the said data about the inclination exceed the preestablished inclination limits;
- Take, from the said positioning device, a reading of the data about the position of the vehicle;
- Write to a register, in accordance with a determined pattern, each reading of data about the inclination and position of the vehicle;
with the device further comprising:
- Means for connecting with an opto-acoustic warning device that can be activated in response to the generation of the said alarm signal; and
- Means for connecting with display means for displaying the said data about the inclination of the vehicle;
with the said display means being located in a position in which they are visible to a user of the vehicle.

The said inclination data preferably consist of data about the pitch and roll of the vehicle.

The device according to the invention preferably comprises a GSM-GPRS device for sending the said data to a remote server. This GSM-GPRS device may be incorporated into the GPS positioning device, or may be separate.

The said preestablished inclination limits may be programmable.

The opto-acoustic warning device may be programmable, and may be assigned different sequences in order to provide different messages to the user.

In this way, the device according to the invention can perform the following functions:
- Real-time monitoring of the inclination of the forestry machinery, in both Cartesian axes parallel to the terrain, with a resolution that is sufficient for this type of application.
- Acquisition of the GPS coordinates of the position that are associated with each inclination reading.
- The display, on an LCD device, of the current inclination values.
- Issuance of an audible and visual warning when the inclination values approach the values that were designated as hazardous.
- Recording of the data history in a flash memory device.

The essential elements of the system are integrated and installed on board the vehicle, such that no exterior infrastructure is needed. The system can be incorporated into any type of forestry machinery, with no need for any prerequisites, regardless of the characteristics of the said machinery.

### Brief description of the drawings

A very brief description will now be provided of a drawing that will assist in a better understanding of the invention and that is presented as an illustrative, but non-limitative, example of the invention.

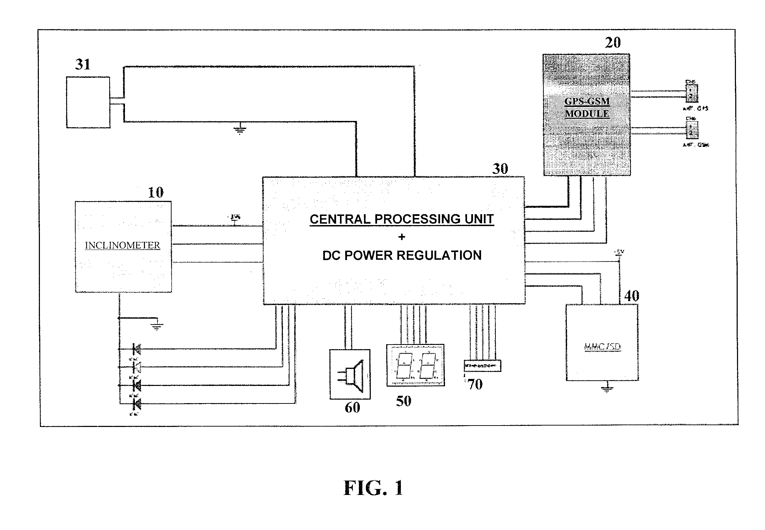

Figure 1 shows a block diagram of the device according to the invention.

### Detailed description of one preferred embodiment of the invention

Figure 1 shows a block diagram of the device according to the invention, as installed onboard the forestry vehicle or machine (for example, a tractor) for which the user wishes to know the risk of rollover when the vehicle or machine is traveling over a given type of terrain.

The device comprises:
- An inclinometer [10], which provides information about the inclination of the vehicle. This inclination information is provided in terms of the pitch and roll of the vehicle in relation to certain Cartesian axes parallel to the terrain on which the vehicle is located;
- A combined GPS/GSM device [20]. This device, in its GPS function, provides the data about the position of the vehicle on the terrain. For this purpose it provides latitude, longitude, and elevation coordinates. In its GSM-GPRS function it acts as a TCP/IP client.
- A central processing unit [30], powered by a power supply [31] (operating at 12 VDC), which performs the following tasks:
   - Reading, comparison, and processing, every 2 seconds (or at a previously established time interval), of the data provided by an inclinometer [10].
   - Reading and processing, every 2 seconds, of the data provided by the GPS device [20].
   - Presentation, every 2 seconds, of the inclinometer data on a dual display [50] that consists of a 7-segment, 2-digit display.
   - Activation, by actuating an alarm relay, of a driver siren [60] when the inclinometer data exceed a preprogrammed limit.
   - Archiving of the data from the inclinometer and from the GPS device in an MMC or SD card [40] every 2.5 seconds.
   - Sending of the said data to a remote server, doing so in continuous GPRS mode. For this purpose, the device includes a GPRS module (which, in the embodiment

shown in Figure 1, is integrated into the GPS device [20], but which may also involve independent devices) that sends the data via the Internet to a TCP/IP socket server consisting of another GPRS module and appropriate software that dumps the data into a computer.

The system includes the INCLISEGUR software program for reading and programming the limits and configurations of the equipment via a USB link.

The archiving or recording of the data on the MMC or SD card [40] takes place every 2 seconds. Each line of the record contains the following real-time data:
*{date, time, latitude, longitude, elevation, speed, pitch, roll}*
   where the speed data are provided by the GPS, in addition to the latitude, longitude, and elevation data, and the pitch and roll data are provided by the inclinometer.

The driver siren [60] (or any other appropriate opto-acoustic warning device) is located on board the vehicle, in a position in which it is visible to the user, and is connected to the device according to the invention. The driver siren, which is programmable, indicates to the user and/or operator the status of the device, and, above all, warns the user and/or operator of a possible violation of any of the programmed inclination limits. For this purpose, the driver siren is programmed to communicate to the user the following alarm conditions and system failures:
- A sequence of 3 long tones, indicating that the permitted threshold has been exceeded along any of the inclination axes.
- A sequence of 3 short tones, indicating a problem with the display or with its connection.
- This same sequence is used to indicate that the display, the GSM network, and the GPS module are operational, if the equipment is being connected for the first time after a power cut-off.
- A sequence of 1 long tone that is triggered a few seconds after power is applied to the system, indicating that the central processing unit is working and is receiving sufficient power.
- A sequence of 4 short tones, indicating an error involving the MMC/SD memory card.

In its preferred embodiment, the device according to the invention is incorporated into an IP56 sealed housing measuring 155 x 110 x 75 mm, which contains the dual-regulated power supply [31], all of the process-control circuitry, the GPS/GPRS device [20], the MMC-SD memory circuit, the card holders and the cards, the docking stations, the inclinometer [10], and the alarm relay for activation of the driver siren [60] (located outside the housing).

The dual display [50], which is also located outside the housing, consists of a black ABS housing that contains two 7-segment displays, each consisting of 2 digits, with each digit measuring 20 x 10 mm. The first digit indicates the maximum degree of pitch of the vehicle and the second digit indicates the maximum degree of roll. This display is connected to the sealed housing by means of a cable 2 meters long and a 4-line connector.

The display module works via serial communications, thanks to the driver circuitry that it includes and that allows it.

The GPS antenna is also connected to this housing, via a plug (so as to allow the operation of the GPS device), which includes a surface-mounted disc antenna approximately 40 mm in diameter and 20 mm high, which is housed in the roof of the vehicle.

The device also includes a PC connection [70], which consists of a special 5-line connector for seating the included USB cable and communicating with a computer that includes a data-processing application known as INCLISEG for Windows.

The central processing unit [30] is based on two high-end PIC series microcontrollers consisting of 14 and 40 pins, respectively.

The smaller microcontroller (PIC16F630) is limited to distributing the serial TX-RX signals to the 3 possible communications channels, i.e.:
- The GPS device (XT-65).
- The MMC/SD memory card.
- The USB port of any computer running the Windows operating system.

The direction of the signals and the data that they contain are controlled originally by the main microcontroller (PIC16F884), which has 8 kilobytes of program memory. This main microcontroller is responsible for performing the tasks that have been programmed for the device. The program for the main microcontroller (PIC16F884) starts by assigning registers, ports, and memory before performing the following processes:
- Turning on and checking the communications with the GPS device. If everything is correct, it actuates the siren for 1 second and then connects the GPS.
- Checking the communications with the MMC/SD memory module and the subsequent configuration of the internal parameters of the module for proper data exchange.
- Reading the configuration register (i.e., the roll and pitch limits) and the status of the record archives and the memory.
- Recording, in EEPROM memory, the current roll and pitch limits.
- Checking the display and its proper connection.

The INCLISEG data-processing application includes a series of functionalities that make it possible to:
- Read (from an onscreen display) the last X records that were archived, where "X" is a number that can be entered by the user.
- Display the most recent 20 to 40 alarms that were recorded by the equipment when the pitch and/or roll threshold limit was exceeded.
- Empty the most recent record archives.
- Empty the alarm archive.
- Copy the archives with the records.
- Change the established pitch and roll limits.
- Change the vehicle model.

The invention has been described in accordance with one of its preferred embodiments. However, it will be obvious to a person skilled in the art that other variations may be introduced without departing from the scope of the claimed invention.

## Claims

1. Device for the dynamic monitoring of the inclination of a forestry vehicle located on a particular type of terrain, which device comprises:
- An inclination measurement unit [10] for providing data about the inclination of the said vehicle;
- A GPS positioning device [20], for providing data about the position of the vehicle on the said terrain;
with the said inclination measurement unit [10] and the said GPS positioning device [20] being installed on board the vehicle and connected to a processing unit [30] that is likewise installed on board the vehicle and that is configured so as, at preestablished time intervals, to:
- Take, from the said inclination measurement unit, a reading of data about the inclination of the vehicle;
- Compare the said data about the inclination of the vehicle against certain preestablished inclination limits;
- Generate an alarm signal if the said data about the inclination exceed the preestablished inclination limits;
- Take, from the said GPS positioning device, a reading of data about the position of the vehicle;
- Write, to a register [40], in accordance with a determined pattern, each reading of data about the inclination and position of the vehicle;
with the device further comprising:
- Means for connecting with an opto-acoustic warning device [60] that can be activated in response to the generation of the said alarm signal; and
- Means for connecting with display means [50] for displaying the said data about the inclination of the vehicle;
with the said display means being located in a position in which they are visible to a user of the vehicle.

2. Device according to Claim 1, **characterized in that** the said data about the inclination include data about pitch and roll.

3. Device according to either of the foregoing claims, which device further comprises a GSM-GPRS device [20] for sending the said data to a remote server.

4. Device according to Claim 3, **characterized in that** the said GSM-GPRS device is integrated with the GPS positioning device.

5. Device according to any one of the foregoing claims, in which the said preestablished inclination limits are programmable.

6. Device according to any one of the foregoing claims, in which the said opto-acoustic warning device [60] is programmable with different sequences in order to provide different warnings to the user.
